(19) Europäisches Patentamt
European Patent Office
Office européen des brevets

(11) EP 1 790 867 B1

(12) EUROPEAN PATENT SPECIFICATION

(45) Date of publication and mention of the grant of the patent:
**06.07.2011 Bulletin 2011/27**

(21) Application number: **05780420.5**

(22) Date of filing: **17.08.2005**

(51) Int Cl.:
***F16C 33/44** (2006.01)* ***C08G 69/26** (2006.01)*
***F16C 33/56** (2006.01)*

(86) International application number:
**PCT/JP2005/015024**

(87) International publication number:
**WO 2006/019121 (23.02.2006 Gazette 2006/08)**

(54) **BEARING RETAINER**

LAGERHALTER

DISPOSITIF DE RETENUE DE PALIER

(84) Designated Contracting States:
**DE FR GB IT**

(30) Priority: **17.08.2004 JP 2004237213**

(43) Date of publication of application:
**30.05.2007 Bulletin 2007/22**

(73) Proprietor: **JTEKT Corporation**
**Osaka-shi**
**Osaka 542-8502 (JP)**

(72) Inventors:
- **NAGAI, Setsuo,**
**c/o JTEKT Corporation**
**Osaka-shi, Osaka 542-8502 (JP)**
- **KUROKAWA, Takanori,**
**c/o JTEKT Corporation**
**Osaka-shi, Osaka 542-8502 (JP)**
- **TSUDA, Takeshi,**
**c/o JTEKT Corporation**
**Osaka-shi, Osaka 542-8502 (JP)**

(74) Representative: **Steil, Christian et al**
**Witte, Weller & Partner**
**Postfach 10 54 62**
**70047 Stuttgart (DE)**

(56) References cited:
**JP-A- 04 362 311** **JP-A- 07 053 715**
**JP-A- 07 190 069** **JP-A- 07 216 223**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 790 867 B1

## Description

FIELD OF THE INVENTION

The present invention relates to a bearing retainer for maintaining a rolling element of a rolling bearing.

BACKGROUND ART

There has been a high demand for producing a bearing retainer of resins from a standpoint of weight saving of rolling bearings, and of VE (Value engineering) / VA (Value Analysis) . However, for example, in rolling bearings used for gear transmissions of automobiles etc., oil lubrication with lubricating oil is used instead of grease. Since the lubricating oil includes additives such as extreme-pressure additives etc. that accelerate deterioration of propeties of resins in many cases, bearing retainers for many rolling bearings used with oil lubrication are still manufactured with metals as usual, and therefore resinification is not yet progressed. Today, resin-made bearing retainers are applied only with very limited lubricating oils. Furthermore, lubricating oils allowing use for the resin-made bearing retainers has only an operating upper limit temperatures for the above-described bearing retainers only in a range about as much as 20 to 30 °C lower than the operating upper limit temperature of the same bearing retainers under an oxidative deterioration environment. Therefore, demanded now is bearing retainers having excellent resistance in a wider temperature range, for as many kinds of lubricating oils as possible.

As bearing retainers having resistance to lubricating oils, patent document 1 discloses a bearing retainer obtained by molding a resin composition comprising: an aromatic polyamide made of an aromatic dicarboxylic acid component unit including at least a terephthalic acid component unit, and a linear aliphatic diamine component unit with a carbon number of 6 to 18; and a glass fiber. Patent document 2 discloses a bearing retainer obtained by molding a resin composition comprising: the above-mentioned aromatic polyamide; a modified polyolefin graft-modified with acrylic acid etc.; and a glass fiber.

Patent document 1: JP, 03-143957, A
Patent document 2: JP, 04-327024, A

JP 07-053715 A discloses a polyamide whose dicarboxylic acid constituent units are composed of 0 to 45 mol.-% terephthalic acid, 0 to 55 mol.-% aromatic dicarboxylic acid other than terephthalic acid and/or 0 to 55 mol-%, 4 to 20 aliphatic dicarboxylic acid and whose diamine constituent units are composed of 55 to 95 mol.-%, 4 to 18C linear alkylene diamine and 5 to 45 mol.-% 4 to 18C alkylene diamine containing a side chain alkyl. The polyamide is described as having a low melting point, a low water absorption and a high TG.

DISCLOSURE OF THE INVENTION

PROBLEM TO BE SOLVED BY THE INVENTION

However, according to examinations of the present inventors, each bearing retainer disclosed in Patent documents 1 and 2 fails to exhibit enough resistance in a sufficiently wide temperature range with respect to sufficiently broad range of lubricating oils, and therefore it is clear that the lubricating oils need further improvement.

An object of the present invention is to provide a resin-made bearing retainer having sufficiently excellent resistance in a wider temperature range with respect to broader kind of lubricating oils, and allowing use in various applications.

MEANS FOR SOLVING PROBLEM

The present invention is a bearing retainer molded with a resin composition comprising a polyamide, the polyamide including:

a repeating unit represented by a formula (1);

[Chem.1]

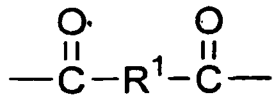

(1)

and

a repeating unit represented by a formula (2),

[Chem.2]

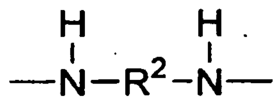

(2)

wherein $R^1$ and $R^2$ in both of the formulas represent three kinds of groups of a p-phenylene group, a linear alkylene group having a carbon number of 6 to 10, and a branched chain alkylene group having a carbon number of 6 to 10.

EFFECT OF THE INVENTION

Since, in the present invention, the p-phenylene group has a function for making rigid a principal chain of the polyamide among the three kinds of groups, rigidification of a principal chain of the polyamide by a function of the p-phenylene group improves heat-resisting property of a bearing retainer, and allows increase of an operating upper limit temperature of the bearing retainer in lubricating oils.

In addition, according to examinations of the present inventors, since the branched alkylene group having a carbon number of 6 to 10 has a function for improvong resistance of the polyamide with respect to extreme-pressure additives included in the lubricating oil among the three kinds of groups, the function of the branched alkylene group can improve the resistance of the bearing retainer to various lubricating oils. Therefore, since the present invention provides excellent resistance with respect to sufficiently more kinds of lubricating oils in a wider temperature range, the present invention makes it possible to provide a resin-made bearing retainer usable for various applications.

In addition, according to the present invention, since the linear alkylene group having a carbon number of 6 to 10 used in combination with the above-mentioned two kinds of groups has a function for providing moderate disorder of regularity in repeating units in the principal chain of the polyamide, and simultaneously has a high degree of freedom and flexibility of rotation of bonds, the linear alkylene group can suppress excessive rigidification of the principal chain of the polyamide, and can also improve moldability of the polyamide in injection molding etc.

Furthermore, use of three kinds of the groups in combination can provide moderate flexibility and toughness to the bearing retainer, and can improve shock resistance of the bearing retainer against impact in rotation of the rolling bearing. Furthermore, for example in a bearing retainer having a pocket for holding rolling elements with an undercut, the use in combination can also prevent generation of breaks and cracks in case of removing out of the molded bearing retainer from a metal mold, and pushing-in of the rolling element into the pocket.

BRIEF DESCRIPTION OF THE DRAWINGS

Figure 1 is a graph illustrating relationships between immersion periods and retentions of tensile strengths to initial values before immersion when bearing retainers manufactured in Examples and Comparative examples of the present invention were immersed in a hot lubricating oil.

EMBODIMENT OF THE INVENTION

A bearing retainer of the present invention is molded with a resin composition comprising a polyamide, the polyamide including:

a repeating unit represented by a formula (1); and

[Chem.3]

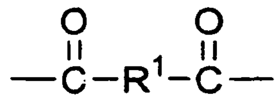

(1)

a repeating unit represented by a formula (2),

[Chem.4]

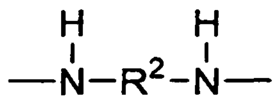

(2)

where $R^1$ and $R^2$ in both of the formulas represent three kinds of groups of a p-phenylene group, a linear alkylene group having a carbon number of 6 to 10, and a branched chain alkylene group having a carbon number of 6 to 10.

A linear alkylene group having a carbon number 6 to 10 among the above-described three kinds of groups include: hexamethylene group [$-(CH_2)_6-$], heptamethylene group [$-(CH_2)_7-$], octamethylene group [$-(CH_2)_8-$], nonamethylene group [$-(CH_2)_9-$], and decamethylene group [$-(CH_2)_{10}-$]. The linear alkylene groups may be used independently, and two or more may be used in combination.

A branched chain alkylene group having a carbon number 6 to 10 include: 2,2-dimethyl tetramethylene group [$-CH_2-C(CH_3)_2-(CH_2)_2-$], 2,3-dimethyl tetramethylene group [$-CH_2-CH(CH_3)-CH(CH_3)-CH_2-$], 2-ethyl-tetramethylene group [$-CH_2-CH(C_2H_5)-(CH_2)_2-$], 2-methyl pentamethylene group [$-CH_2-CH(CH_3)-(CH_2)_3-$], 3-methyl pentamethylene group [$-(CH_2)_2-CH(CH_3)-(CH_2)_2-$], 2,3-dimethyl pentamethylene group $-CH_2-CH(CH_3)-CH(CH_3)-(CH_2)_2-$], 2, 4-dimethyl pentamethylene group [$-CH_2-CH(CH_3)-CH_2-CH(CH_3)-CH_2-$], 2-methyl hexamethylene group [$-CH_2-CH(CH_3)-(CH_2)_4-$], 3-methyl hexamethylene group [$-(CH_2)_2-CH(CH_3)-(CH_2)_3-$], 2,4-dimethyl hexamethylene group [$-CH_2-CH(CH_3)-CH_2-CH(CH_3)-(CH_2)_2-$], 2,5-dimethyl hexamethylene group [$-CH_2-CH(CH_3)-(CH_2)_2-CH(CH_3)-CH_2-$], 2-methyl heptamethylene group [$-CH_2-CH(CH_3)-(CH_2)_5-$], 3-methyl heptamethylene group [$-(CH_2)_2-CH(CH_3)-(CH_2)_4-$], 4-methyl heptamethylene group [$-(CH_2)_3-CH(CH_3)-(CH_2)_3-$], 2,4-dimethyl heptamethylene group [$-CH_2-CH(CH_3)-CH_2-CH(CH_3)-(CH_2)_3-$] etc. Also the branched alkylene groups may be used independently, and two or more may be used in combination.

Polyamides obtained by arbitrary combination of the above-described three kinds of groups may be used as the polyamides. In consideration of balance of the effects obtained by each group described-above, a proportion of the three kinds of groups included in the polyamide is preferably within a range wherein a molar ratio of (p-phenylene group) /(alkylene group) of the p-phenylene group and a total of two kinds of the alkylene groups satisfies an equation (i).

$$\frac{\text{(p-phenylene group)}}{\text{(alkylene group)}} = 1.2/1 \text{ to } 1/1.2 \qquad \text{(i)}$$

A proportion of the p-phenylene groups less than the above-described range may possibly fail to give enough effect of improving heat-resisting property of the bearing retainer and of simultaneously increasing an operating upper limit temperature of the bearing retainer in lubricating oils by rigidification of a principal chain of the polyamide by the p-phenylene group. Alternatively, a proportion of the p-phenylene groups more than the above-described range relatively reduces a proportion of the branched chain alkylene groups and may possibly fail to give sufficient effect of improving resistance of the bearing retainer to various lubricating oils due to the branched chain alkylene groups.

In addition, since a proportion of the linear alkylene groups also relatively decreases, there may be a possibility of failing to give sufficient effect of suppression of excessive rigidification of the principal chain of the polyamide by the linear alkylene groups, and of simultaneous improvement in moldability of the polyamide using injection molding etc. In addition, for a bearing retainer having a pocket with an undercut, there may be a possibility of giving easy generation of breaks and cracks in the bearing retainer when molding thereof and press fitting of a rolling element thereto.

Furthermore, with respect to a proportion of the linear alkylene groups and the branched chain alkylene groups, a molar ratio of (linear alkylene group) / (branched chain alkylene - group) preferably is within a range satisfying an equation (ii).

$$\frac{\text{(linear alkylene group)}}{\text{(branched chain alkylene group)}} = 2/1 \text{ to } 1/4 \quad \text{(ii)}$$

A proportion of the branched chain alkylenes less than the above-described range may possibly fail to give sufficient effect of improving resistance of the bearing retainer to various lubricating oils by the branched chain alkylene groups. In addition, the linear alkylene groups less than the above-described range may possibly fail to give enough effect of improvement in moldability of the polyamide in injection molding etc. based on suppression of excessive rigidification of principal chains of the polyamide by the linear alkylene group. In addition, in a bearing retainer having a pocket with an undercut, there may be a possibility of giving easy generation of breaks and cracks in the bearing retainer when molding thereof and press fitting of a rolling element thereto.

As polyamides including the three kinds of groups at an afore-mentioned proportion, for example, a polyamide may be mentioned wherein one of $R^1$ and $R^2$ in the formulas (1) and (2) represents p-phenylene group, and the other represents a mixed groups of the two kinds of alkylene groups. Examples of the polyamides will be shown below.

(I) A polyamide including:

a repeating unit represented by a formula (1-1), where $R^1$ in the formula (1) represents a p-phenylene group;

[Chem.5]

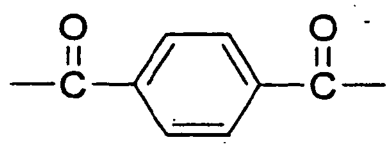

(1-1)

at least one kind of repeating units represented by a formula (2-1), where $R^2$ in the formula (2) represents a linear alkylene group having a carbon number 6 to 10

[Chem.6]

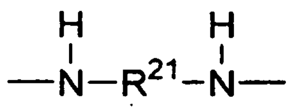

(2-1)

[$R^{21}$ in the formula represents a linear alkylene group having a carbon number 6 to 10]; and
at least one kind of repeating units represented by a formula (2-2), where, $R^2$ in the formula (2) represents a branched chain alkylene group having carbon number 6 to 10

[Chem.7]

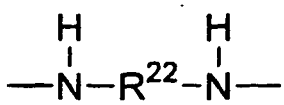

(2-2)

[$R^{22}$ in the formula represents a branched chain alkylene group having a carbon number 6 to 10].

(II) A polyamide including:

at least one kind of repeating units represented by a formula (1-2), where $R^1$ in the formula (1) represents a linear alkylene group having a carbon number 6 to 10

[Chem.8]

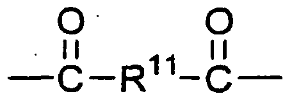

(1-2)

[$R^{11}$ in the formula represents a linear alkylene group having a carbon number 6 to 10];
at least one kind of repeating units represented by a formula (1-3), where $R^1$ in the formula (1) represents a branched chain alkylene group having a carbon number 6 to 10

[Chem.9]

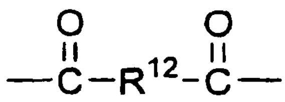

(1-3)

[$R^{12}$ in the formula represents a branched chain alkylene group having a carbon number 6 to 10] ; and
a repeating unit represented by a formula (2-3), where $R^2$ in the formula (2) represents a p-phenylene group.

[Chem.10]

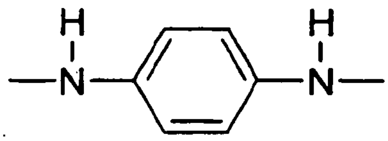

(2-3)

However, as the polyamide such polyamides may be used, for example, wherein a part of $R^1$ represents a p-phenylene group, and the remainder is at least one of the two kinds of alkylene groups; a part of $R^2$ is a p-phenylene group, and a remainder is at least one of the two kinds of alkylene groups; and a proportion of the three kinds of groups is within the above-described range.

The polyamides may be synthesized, by conventional methods, by a reaction in a range of a stoichiometric amount of a dicarboxylic acid component represented by a formula (3), and

[Chem.11]

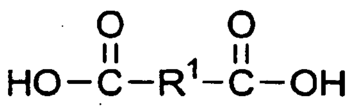

(3)

a diamine component represented by a formula (4).

[Chem.12] $H_2N-R^2-NH_2$ (4)

For example, the polyamide (I) may be synthesized by reacting terephthalic acid in which $R^1$ in the formula (3) represents a p-phenylene group; at least one kind of linear aliphatic diamines in which $R^2$ in the formula (4) represents a linear alkylene group having a carbon number 6 to 10; and at least one kind of branched chain aliphatic diamines in which $R^2$ in the formula (4) represents a branched chain alkylene group having a carbon number 6 to 10, at a proportion of approximately 1 mol of a total amount of the two kinds of diamines with respect to 1 mol of the terephthalic acid.

In addition, the polyamide of (II) may be synthesized by reacting at least one kind of linear aliphatic dicarboxylic acids in which $R^1$ in the formula (3) represents a linear-alkylene group having a carbon number 6 to 10; at least one kind of branched chain aliphatic dicarboxylic acids in which $R^1$ in the formula (3) represents a branched chain alkylene group having a carbon number 6 to 10; and a p-phenylenediamine in which $R^2$ in the formula (4) represents a p-phenylene group, at a proportion of approximately 1 mol of a total amount of the two kinds of dicarboxylic acids with respect to 1 mol of the p-phenylenediamine.

Methods for reacting each of the components to synthesize the polyamide include, for example, a method of polycondensation of each of the components by a solution method or an interfacial method, and a method of solution polymerization or solid state polymerization after synthesis of an oligomer by heating of nylon salts formed from each of the components etc.

Other resins may be blended with a resin composition as a base substance of the bearing retainer including the polyamide in a range that does not degrade properties of the polyamide. Other resins that may be blended include various polyamides other than the above-described polyamide. However, in consideration of prevention of deterioration of resistance of the bearing retainer to extreme-pressure additives etc. included in lubricating oils, a blending proportion of the other resins is preferably not more than 10 parts by weight with respect to 100 parts by weight of the polyamide.

Reinforcing fibers, fillers, and various kinds of other additives may be blended to the resin composition in order to reinforce the bearing retainer, as in conventional cases. The reinforcing fibers include, for example, glass fibers, carbon fibers, fibrous wollastonite, silicon carbide fibers, boron fibers, alumina fibers, Si-Ti-C-O fibers, metal fibers (copper, steel, stainless steel, etc.), aromatic polyamide (aramid) fibers, potassium titanate whiskers, graphite whiskers, silicon carbide whiskers, silicon nitride whiskers, alumina whiskers etc.

The fillers include, for example, powders of heat resistant resins, such as phenol resin, silicone resin, fluororesin, polyamideimide resin, polyimide resin, and aromatic polyamide resin; and powders of inorganic substances, such as graphite, alumina, silica, silicon carbide, silicon nitride, carbon black, molybdenum disulfide, talc, diatomaceous earth, asbestos, magnesium carbonate, calcium carbonate, glass beads, and silica balloons, etc.

In blending of the reinforcing fibers and the fillers, either of them may be blended with the resin composition, and both of them may be blended. A blending ratio of the independent component in independent blending of either of the reinforcing fibers or the fillers, or a blending ratio of a sum of both of them in blending of both of them is preferably 10 to 40 parts by weight to 100 parts by weight of a total amount of resins including the polyamide. The amount of resins is the amount of the polyamide, when the resins is only polyamide, or the total amount of the polyamide and other resins, when the resin is a mixture of them. A blending ratio of reinforcing fibers and/or fillers of less than the above-described range may not allow sufficient exhibition of effect of addition of these components, that is, effect of reinforcing the bearing retainer. In addition, a blending ratio exceeding the range may give possible deterioration of moldability of the resin compositions by injection molding.

The bearing retainer of the present invention may be manufactured in such a manner that the respective components are molded in shapes usable as a molding material having a shape of pellets or powder after melting and kneading of each of the components to be molded by an injection molding etc. as in conventional methods. A structure of the present invention may be applied to bearing retainers having any shapes for various rolling bearings, such as ball bearings, needle roller bearings, cylindrical roller bearings, and cone roller bearings etc.

The above-described bearing retainer of the present invention has sufficiently excellent resistance in a wider temperature range and to broader kind of lubricating oils as compared with conventional polyamide bearing retainers, and thereby it may be used in various application, such as rolling bearings used under environment of oil lubrication where resin-made bearing retainers have not been applicable. Therefore, use by incorporation to rolling bearings etc. in gear transmissions of automobiles where metal bearing retainers have been used until now will enable weight saving of the rolling bearings, and lower cost etc.

EXAMPLE

<Example 1>

A polyamide of 70 parts by weight made of a repeating unit represented by the formula (1-1), wherein $R^1$ in

the formula (1) represents a p-phenylene group; two kinds of repeating units represented by the formula (2), that is, a repeating unit represented by the formula (2-1), wherein $R^{21}$ in the formula (2-1) represents a hexamethylene group; and a repeating unit represented by the formula (2-2), wherein $R^{22}$ in the formula (2-2) represents a 2-methylhexamethylene group, and a glass fiber of 30 parts by weight were melted and kneaded together to obtain a resin composition. A bearing retainer was manufactured by injection molding using the resin composition.

In the polyamide, the molar ratio of (p-phenylene group) / (alkylene group) represented by the equation (i) of p-phenylene group and total of two kinds of alkylene groups was 1/1, and a molar ratio of (linear alkylene group) / (branched chain alkylene group) represented by the equation (ii) of hexamethylene group as a linear alkylene group and 2-methylhexamethylene group as a branched chain alkylene group was 2 / 3 to 1 / 4.

<Comparative example 1>

A polyamide of 70 parts by weight made of a repeating unit represented by the formula (1-1) wherein $R^1$ in the formula (1) represents a p-phenylene group; and a repeating unit represented by the formula (2) wherein $R^2$ in the formula (2) represents a hexamethylene group, and a glass fiber of 30 parts by weight were melted and kneaded together to obtain a resin composition. A bearing retainer was manufactured by injection molding using the resin composition. A molar ratio (p-phenylene group) / (hexamethylene group) of p-phenylene group and hexamethylene group in the polyamide was 1 / 1.

<Comparative example 2>

A polyamide of 70 parts by weight made of a repeating unit represented by the formula (1-1) wherein $R^1$ in the formula (1) represents a p-phenylene group; a repeating unit represented by the formula (1) wherein $R^1$ in the formula (1) represents a tetramethylene group; and a repeating unit represented by the formula (2) wherein $R^2$ in the formula (2) represents a hexamethylene group, and a glass fiber of 30 parts by weight were melted and kneaded together to obtain a resin composition. A bearing retainer was manufactured by injection molding using the resin composition. In the polyamide, a molar ratio of (p-phenylene group + tetramethylene group) / (hexamethylene group) of a total of p-phenylene group and tetramethylene group with hexamethylene group were 1 / 1, and a molar ratio of p-phenylene group and tetramethylene group was (p-phenylene group) > (tetramethylene group).

<Oil resistance test>

Two or more bearing retainers according to Example and Comparative examples, respectively, were prepared. Each one of the bearing retainers was measured for a tensile strength to obtain an initial value of the tensile strength. Subsequently, remaining two or more bearing retainers of each samples were immersed in a lubricating oil for automatic transmissions for automobiles including extreme-pressure additives heated by 150 °C. And at immesion periods of 120 hours, 240 hours, 500 hours, and 1000 hours from immersion start, each one of the bearing retainers manufactured in Example and Comparative examples, respectively, was withdrawn from the oil. Each of the samples was measured for a tensile strength, and retention (%) of the tensile strength to the initial value was determind. Relationships between the immersion periods and the retentions were plotted in Figure 1.

With reference to the figure, it is clarified that the bearing retainer of Example 1 exhibits smaller decreasing rate of the tensile strength as compared with the samples of Comparative examples 1 and 2, and that it maintains not less than 80% of the tensile strength of the initial value even after 1000 hours of immersion.

## Claims

**1.** A bearing retainer molded with a resin composition comprising a polyamide, the polyamide including: a repeating unit represented by a formula (1); and

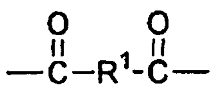

(1)

a repeating unit represented by a formula (2),

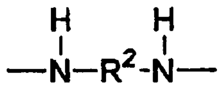

(2)

wherein $R^1$ and $R^2$ in both of the formulas represent three kinds of groups of a p-phenylene group, a linear alkylene group having a carbon number of 6 to 10, and a branched chain alkylene group having a carbon number of 6 to 10, whereby the polyamide comprises a combination of the above-described three kinds of groups, and
wherein a molar ratio of the linear alkylene group having a carbon number of 6 to 10 by the branched chain alkylene group having a carbon number of 6 to 10 (linear alkylene group)/(branched chain alkylene group) is in range from 2/1 to 1/4.

2. The bearing retainer according to claim 1, wherein the molar ratio of (linear alkylene group)/(branched chain alkylene group) is in a range from 2/3 to 1/4.

3. The bearing retainer according to Claim 1 or 2, wherein the polyamide includes a repeating unit represented by a formula (1-1);

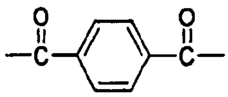

(1-1)

a repeating unit represented by a formula (2-1)

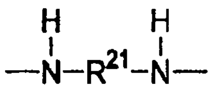

(2-1)

where $R^{21}$ represents a linear alkylene group having a carbon number of 6 to 10; and a repeating unit represented by a formula (2-2)

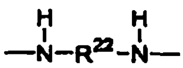

(2-2)

where $R^{22}$ represents a branched chain alkylene group having a carbon number of 6 to 10.

4. The bearing retainer according to Claim 1 or 2, wherein the polyamide includes a repeating unit represented by a formula (1-2)

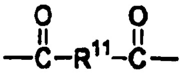

(1-2)

where $R^{11}$ represents a linear alkylene group having a carbon number of 6 to 10; a repeating unit represented by a formula (1-3)

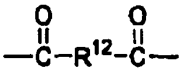

(1-3)

where $R^{12}$ represents a branched chain alkylene group having a carbon number of 6 to 10; and
a repeating unit represented by a formula (2-3).

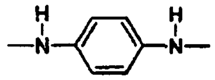 (2-3)

5. The bearing retainer according to any one of Claims to 4, wherein the polyamide is synthesized by reacting a dicarboxylic acid component represented by a formula (3), and

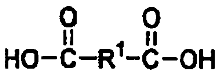 (3)

a diamine component represented by a formula (4).

$$H_2N\text{-}R^2\text{-}NH_2 \qquad (4)$$

6. The bearing retainer according to any one of Claims to 5, that is used in a state being incorporated in a rolling bearing of a transmission of an automobile.

**Patentansprüche**

1. Lagerhalter, der aus einer Harzzusammensetzung geformt ist, die ein Polyamid aufweist, wobei das Polyamid Folgendes einschließt, nämlich: eine sich wiederholende Einheit, die durch eine Formel (1) dargestellt wird; und

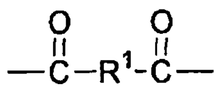 (1)

eine sich wiederholende Einheit, die durch eine Formel (2) dargestellt wird,

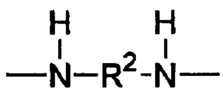 (2)

worin $R^1$ und $R^2$ in beiden Formeln für drei Arten von Gruppen stehen, nämlich eine p-Phenylengruppe, eine lineare Alkylengruppe mit einer Kohlenstoffzahl von 6 bis 10, und eine verzweigtkettige Alkylengruppe mit einer Kohlenstoffzahl von 6 bis 10, wobei das Polyamid eine Kombination der zuvor beschriebenen drei Arten von Gruppen aufweist, und
worin ein Molverhältnis der linearen Alkylengruppe mit einer Kohlenstoffzahl von 6 bis 10 zur verzweigtkettigen Alkylengruppe mit einer Kohlenstoffzahl von 6 bis 10 (lineare Alkylengruppe)/(verzweigtkettige Alkylengruppe) in einem Bereich von 2/1 bis 1/4 liegt.

2. Lagerhalter nach Anspruch 1, wobei das Molverhältnis (lineare Alkylengruppe)/(verzweigtkettige Alkylengruppe) in einem Bereich von 2/3 zu 1/4 liegt.

3. Lagerhalter nach Anspruch 1 oder 2, wobei das Polyamid Folgendes einschließt, nämlich eine sich wiederholende Einheit, die durch eine Formel (1-1) dargestellt wird;

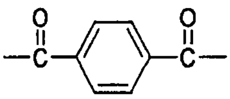 (1-1)

eine sich wiederholende Einheit, die durch eine Formel (2-1) dargestellt wird

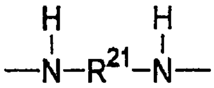 (2-1) ,

wobei $R^{21}$ für eine lineare Alkylengruppe mit einer Kohlenstoffzahl von 6 bis 10 steht; und eine sich wiederholende Einheit, die durch eine Formel (2-2) dargestellt wird

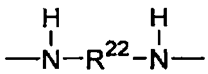 (2-2) ,

wobei $R^{22}$ für eine verzweigtkettige Alkylengruppe mit einer Kohlenstoffzahl von 6 bis 10 steht.

4. Lagerhalter nach Anspruch 1 oder 2, wobei das Polyamid Folgendes einschließt, nämlich eine sich wiederholende Einheit, die durch eine Formel (1-2) dargestellt wird

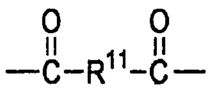 (1-2) ,

wobei $R^{11}$ für eine lineare Alkylengruppe mit einer Kohlenstoffanzahl von 6 bis 10 steht; eine sich wiederholende Einheit, die durch eine Formel (1-3) dargestellt wird

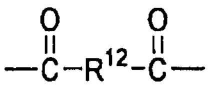 (1-3) ,

wobei $R^{12}$ für eine verzweigtkettige Alkylengruppe mit einer Kohlenstoffzahl von 6 bis 10 steht; und eine sich wiederholende Einheit, die durch eine Formel (2-3) dargestellt wird.

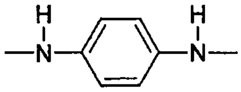 (2-3)

5. Lagerhalter nach einem der Ansprüche 1 bis 4, wobei das Polyamid durch Umsetzen eines Dicarbonsäurebestandteils, der durch eine Formel (3) dargestellt wird,

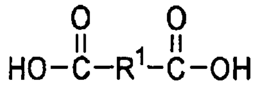 (3)

mit einem Diaminbestandteil, der durch eine Formel (4) dargestellt wird, synthetisiert wird.

$H_2N\text{-}R^2\text{-}NH_2$ (4)

**6.** Lagerhalter nach einem der Ansprüche 1 bis 5, der in einem Zustand verwendet wird, in dem er in einem Wälzlager eines Getriebes eines Automobils eingebaut ist.

## Revendications

**1.** Bague de roulement moulée avec une composition de résine comprenant un polyamide, le polyamide comprenant : une unité répétitive représentée par une formule (1) ; et

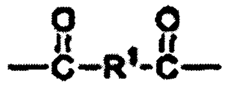 (1)

une unité répétitive représentée par une formule (2),

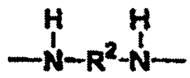 (2)

dans lesquelles $R^1$ et $R^2$ dans les deux formules représentent trois types de groupes d'un groupe p-phénylène, d'un groupe alkylène linéaire ayant de 6 à 10 atomes de carbone et d'un groupe alkylène ramifié ayant de 6 à 10 atomes de carbone, le polyamide comprend par là une combinaison des trois types de groupes décrits ci-dessus, et dans laquelle un rapport molaire du groupe alkylène linéaire ayant de 6 à 10 atomes de carbone au groupe alkylène ramifié ayant de 6 à 10 atomes de carbone (groupe alkylène linéaire)/(groupe alkylène ramifié) se trouve dans un intervalle de 2/1 à 1/4.

**2.** Bague de roulement selon la revendication 1, dans lequel le rapport molaire de (groupe alkylène linéaire)/(groupe alkylène ramifié) se trouve dans un intervalle de 2/3 à 1/4.

**3.** Bague de roulement selon la revendication 1 ou 2, dans laquelle le polyamide comprend une unité répétitive représentée par une formule (1-1) ;

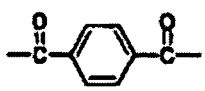 . (1-1)

une unité répétitive représentée par une formule (2-1)

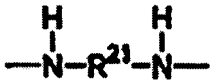

(2-1)

dans laquelle $R^{21}$ représente un groupe alkylène linéaire ayant de 6 à 10 atomes de carbone ; et une unité répétitive représentée par une formule (2-2)

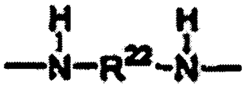

(2-2)

dans laquelle $R^{22}$ représente un groupe alkylène ramifié ayant de 6 à 10 atomes de carbone.

**4.** Bague de roulement selon la revendication 1 ou 2, dans laquelle le polyamide comprend une unité répétitive représentée par une formule (1-2)

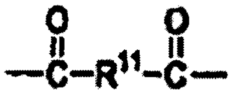

(1-2)

dans laquelle $R^{11}$ représente un groupe alkylène linéaire ayant de 6 à 10 atomes de carbone ; une unité répétitive représentée par une formule (1-3)

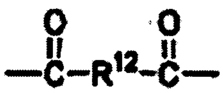

(1-3)

dans laquelle $R^{12}$ représente un groupe alkylène ramifié ayant de 6 à 10 atomes de carbone ; et une unité répétitive représentée par une formule (2-3).

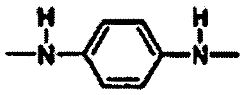

(2-3)

**5.** Bague de roulement selon l'une quelconque des revendications 1 à 4, dans laquelle le polyamide est synthétisé par réaction d'un constituant d'acide dicarboxylique représenté par une formule (3), et

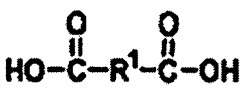

(3)

d'un constituant de diamine représenté par une formule (4).

$$H_2N\text{-}R^2\text{-}NH_2 \qquad (4)$$

**6.** Bague de roulement selon l'une quelconque des revendications 1 à 5, laquelle est utilisée dans un état incorporé dans un roulement d'une transmission d'un véhicule automobile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3143957 A
- JP 4327024 A
- JP 7053715 A